# EUROPÄISCHE PATENTSCHRIFT

(11) **EP 0 622 567 B1**
(45) Veröffentlichungstag und Bekanntmachung des Hinweises auf die Patenterteilung: **10.01.1996**
(21) Anmeldenummer: 94102051.3
(22) Anmeldetag: 10.02.1994
(51) Int. Cl.: F16H 55/36, F16F 15/12

(54) **VERFAHREN ZUR HERSTELLUNG EINER RIEMENSCHEIBE**
METHOD OF MAKING A PULLEY
PROCEDE DE FABRICATION D'UNE POULIE

(30) Priorität: 27.04.1993 DE 4313755
(43) Veröffentlichungstag der Anmeldung: 02.11.1994
(73) Patentinhaber: Firma Carl Freudenberg, D-69469 Weinheim (DE)
(72) Erfinder: Ochs, Winfried, Dr., D-64665 Alsbach-Hähnlein (DE); Ullrich, Günter, D-69502 Hemsbach (DE); Hönlinger, Herwig, D-68649 Gross-Rohrheim (DE)

(56) Entgegenhaltungen:
- FR-A- 2 341 073
- US-A- 2 722 138
- US-A- 2 723 573

## Beschreibung

Die Erfindung betrifft ein Verfahren zur Herstellung einer Riemenscheibe mit im wesentlichen topfförmigem Profil, deren Riemenauflage zumindest einseitig in axialer Richtung von einer einstückig angeformten Bordscheibe begrenzt ist und mit einem, mittels eines Dämpfungsrings aus elastomerem Werkstoff mit der Riemenscheibe verbundenen Trägheitsring, wobei die angeformte Bordscheibe in axialer Richtung in einen Nabenring übergeht, der mittels eines Dämpfungsrings mit dem Trägheitsring verbunden ist.

Aus der US-A-2,722,138 ist eine Riemenscheibe bekannt, hergestellt gemäß eines Verfahrens nach dem Oberbegriff des Anspruchs 1, die aus einem Nabenring besteht auf dessen Außenumfang zwei kreisförmige Blechteile aufgepreßt sind. Die beiden Blechteile sind einander axial benachbart zugeordnet und begrenzen in radialer Richtung außenseitig eine radial nach außen offene, V-förmig Nut, die die Aufnahme für einen entsprechend gestalteten Riemen bildet. Eines den Blechteile ist im Bereich seiner radial äußeren Begrenzung in axialer Richtung umgeformt und umschließt einen Schwungring außenumfangsseitig mit radialem Abstand. Innerhalb des durch den Abstand gebildeten Spalts ist ein Dämpfungsring aus elastomerem Werkstoff angeordnet.

Aus der US-A-2,723,573 ist eine weitere Riemenscheibe bekannt, die im wesentlichen aus drei Blechteilen besteht, die mit einem Nabenring verbunden sind. An einem axialen Ende einer Kurbelwelle ist die Riemenscheibe befestigt, wobei auf der der Kurbelwelle abgewandten Seite der Riemenscheibe ein Schwungring angeordnet ist, der durch einen Federkörper mit der Riemenscheibe verbunden ist.

Aus der FR-A-2341 073 ist ein Torsionsschwingungsdämpfer bekannt, der im wesentlichen aus einem topfförmigen Nabenring besteht und außen- und innenumfangsseitig jeweils mit einem Schwungring verbunden ist, wobei die Schwungringe zur breitbandigen Dämpfung von Torsionsschwingungen jeweils eine voneinander abweichende Schwungmasse aufweisen.

Der Erfindung liegt die Aufgabe zugrunde, ein Verfahren zur Herstellung einer Riemenscheibe mit im wesentlichen topfförmigem Profil zu zeigen, das einfach durchführbar ist, wobei die durch das Verfahren hergestellte Riemenscheibe gute schwingungsdämpfende Eigenschaften aufweisen soll.

Diese Aufgabe wird erfindungsgemäß mit den Merkmalen von Anspruch 1 gelöst. Auf eine vorteilhafte Weiterbildung nimmt Anspruch 2 Bezug.

Im Rahmen der vorliegenden Erfindung ist es vorgesehen, daß die Riemenauflage und der Vorsprung dadurch erzeugt werden, daß der sich in radialer Richtung erstreckende Riemenscheibenkörper zunächst gespalten und die dadurch erzeugten Teilbereiche dann jeweils in entgegengesetzter Richtung umgeformt werden und daß im Anschluß an die Umformung in axialer Richtung einerseits die Profilierung der Riemenauflage erzeugt und in axialer Richtung andererseits der Torsionsschwingungsdämpfer vervollständigt wird. Hierbei ist von Vorteil, daß der durch das Verfahren erzeugte Torsionsschwingungsdämpfer mit der Riemenscheibe einstückig verbunden ist, wodurch die Herstellung des Bauteils und die Montage beispielsweise einer Verbrennungskraftmaschine vereinfacht ist. Der Torsionsschwingungsdämpfer kann in seinem Aufbau bekannten Torsionsschwingungsdämpfern entsprechen, wobei der Dämpfungsring, der zwischen dem Naben- und dem Trägheitsring angeordnet ist und beide Teile drehelastisch aufeinander abstützt, eingeschossen oder vulkanisiert sein kann.

Gemäß einer vorteilhaften Weiterbildung des Verfahrens ist es vorgesehen, daß der entgegen der Riemenauflage umgeformte Vorsprung zur Vervollständigung des Torsionsschwingungsdämpfers außen- und/oder innenumfangsseitig vom Dämpfungs- und Trägheitsring umschlossen wird. Die Riemenauflage und der Vorsprung werden dadurch erzeugt, daß der sich in radialer Richtung erstreckende Riemenscheibenkörper gespalten und die dadurch erzeugten Teilbereiche jeweils in entgegengesetzter axialer Richtung umgeformt werden. Im Anschluß an die Umformung wird die Profilierung der Riemenauflage erzeugt und in axialer Richtung andererseits der Torsionsschwingungsdämpfer vervollständigt.

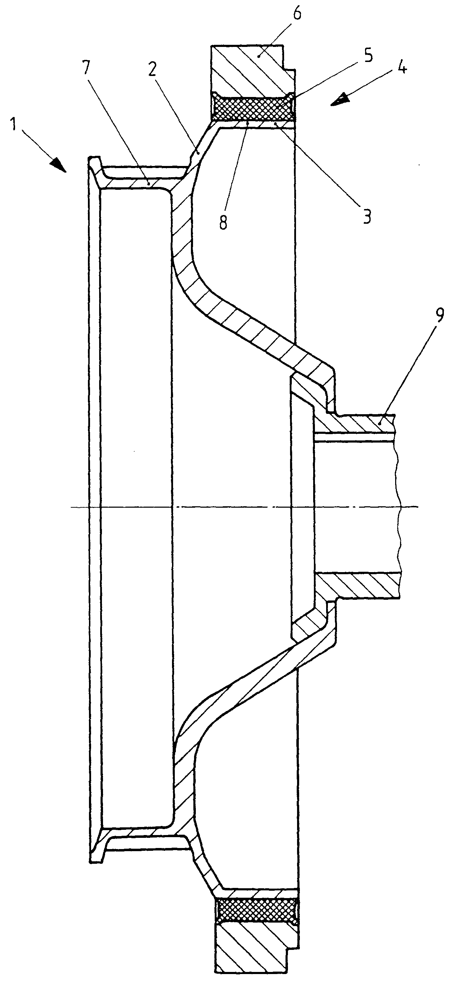

Die durch das erfindungsgemäße Verfahren hergestellte Riemenscheibe wird nachfolgend anhand der beigefügten Zeichnung näher erläutert.

In der Figur ist eine durch das erfindungsgemäße Verfahren hergestellte Riemenscheibe 1 in quergeschnittener Darstellung schematisch gezeigt. Die Riemenscheibe 1 umfaßt einen Riemenscheibenkörper, der eine Riemenauflage 7 umfaßt und drehfest mit einem Antrieb 9 verbunden ist. Der Antrieb 9 kann beispielsweise durch die Kurbelwelle einer Verbrennungskraftmaschine gebildet sein. Der sich in radialer Richtung erstreckende Verbindungssteg zwischen dem Antrieb 9 und der Riemenauflage 7 ist im wesentlichen S-förmig geschwungen ausgebildet. Auf der dem Antrieb 9 zugewandten axialen Begrenzung ist die Riemenscheibe 1 mit einer Bordscheibe 2 versehen, die einstückig mit dem Riemenscheibenkörper verbunden ist und von der radialen in axiale Richtung übergehend umgeformt ist. Der sich in axialer Richtung entgegen der Richtung der Riemenauflage 7 erstreckende Vorsprung 8 bildet den Nabenring 3 des Torsionsschwingungsdämpfers 4. Der Nabenring 3 und der Trägheitsring 6 sind in diesem Ausführungsbeispiel adhäsiv durch einen Dämpfungsring 5 aus elastomerem Werkstoff miteinander verbunden. Durch die einstückige Ausgestaltung von Riemenscheibe 1 und Torsionsschwingungsdämpfer 4, die eine vormontierbare Einheit bilden, ist die Montage am Antrieb 9 wesentlich vereinfacht. Durch den einfachen Aufbau ist eine wirtschaftliche Fertigung möglich. Die Ausgestaltung der Riemenauflage 7 kann von der hier gezeigten abweichen, ebenso wie die Dimensionierung und Gestalt des Dämpfungs- 5 und Trägheitsringes 6.

## Patentansprüche

1. Verfahren zur Herstellung einer Riemenscheibe (1) mit im wesentlichen topfförmigem Profil, deren Riemenauflage (7) zumindest einseitig in axialer Richtung von einer einstückig angeformten Bordscheibe (2) begrenzt ist und mit einem, mittels des Dämpfungsrings (5) aus elastomerem Werkstoff mit der Riemenscheibe (1) verbundenen Trägheitsring (6), wobei die angeformte Bordscheibe (2) in axialer Richtung in einen durch einen Vorsprung gebildeten Nabenring (3) übergeht, der mittels des Dämpfungsrings (5) mit dem Trägheitsring (6) verbunden ist, dadurch gekennzeichnet, daß die Riemenauflage (7) und der Vorsprung (8) dadurch erzeugt werden, daß der sich in radialer Richtung erstreckende Riemenscheibenkörper (1) zunächst gespalten und die dadurch erzeugten Teilbereiche jeweils in entgegengesetzter axialer Richtung umgeformt werden und daß im Anschluß an die Umformung in axialer Richtung einerseits die Profilierung der Riemenauflage (7) erzeugt und in axialer Richtung andererseits der Torsionsschwingungsdämpfer (4) vervollständigt wird.

2. Verfahren nach Anspruch 1, dadurch gekennzeichnet, daß der entgegen der Riemenauflage (7) umgeformte Vorsprung (8) zur Vervollständigung des Torsionsschwingungsdämpfers (4) außen- und/oder innenumfangsseitig von dem Dämpfungs- (5) und Trägheitsring (6) umschlossen wird.

## Claims

1. A method of making a pulley (1) having an essentially pot-shaped profile, whose belt rest (7) is bounded at least on one side in the axial direction by an integrally moulded-on flanged wheel (2), and having an inertia ring (6) which is connected to the pulley (1) by means of the damping ring (5) of elastomeric material, the moulded-on flanged wheel (2) merging in the axial direction into a hub ring (3) which is formed by a projection and is connected to the inertia ring (6) by means of the damping ring (5), characterized in that the belt rest (7) and the projection (8) are produced by the fact that the pulley body (1) extending in the radial direction is firstly split and the partial regions thus produced are shaped in each case in the opposite axial direction and that, following the shaping in the axial direction, on the one hand the profiling of the belt rest (7) is produced and, on the other hand, in the axial direction the torsional vibration damper (4) is completed.

2. A method according to claim 1, characterized in that the projection (8) shaped counter to the belt rest (7) is enclosed on the outer and/or inner circumferential side by the damping ring (5) and inertia ring (6) to complete the torsional vibration damper (4).

## Revendications

1. Procédé de fabrication d'une poulie (1) comportant un profil essentiellement en forme de pot, dont le support de courroie (7) est limité au moins d'un côté dans le sens axial par une poulie à rebord (2) solidaire de celui-ci et comportant une bague inertielle (6) reliée à la poulie (1) au moyen de la bague d'amortissement (5) en matière élastomère, la poulie à rebord (2) solidaire passant dans le sens axial dans une frette de roue (3) formée par une partie en saillie, qui est reliée à la bague inertielle (6) au moyen de la bague d'amortissement (5), caractérisé en ce que le support de courroie (7) et la partie en saillie (8) sont produits du fait que le corps de poulie (1) s'étendant dans le sens radial est d'abord fendu et que les zones partielles ainsi produites sont à chaque fois déformées dans le sens axial opposé et en ce que faisant suite à la déformation, le profilage du support de courroie (7) est d'une part produit dans le sens axial et, l'amortisseur d'oscillation de torsion (4) est d'autre part complété dans le sens axial.

2. Procédé selon la revendication 1, caractérisé en ce que la partie faisant saillie (8) déformée, située en sens inverse du support de courroie (7), est entourée sur le côté périphérique extérieur et/ou intérieur de la bague d'amortissement (5) et de la bague inertielle (6) en vue de compléter l'amortisseur d'oscillation de torsion (4).
